# EUROPÄISCHE PATENTSCHRIFT

(11) **EP 2 539 172 B1**
(45) Veröffentlichungstag und Bekanntmachung des Hinweises auf die Patenterteilung: **05.06.2019**
(21) Anmeldenummer: 10798013.8
(22) Anmeldetag: 18.12.2010
(51) Int. Cl.: B60K 35/00, B60K 37/00, B60Q 1/14, B60R 16/02, B62D 1/04

(54) **ANZEIGE- UND BEDIENSYSTEM EINES KRAFTFAHRZEUGS**
DISPLAY AND OPERATING SYSTEM FOR VEHICLES
SYSTÈME D'AFFICHAGE ET DE COMMANDE POUR UN VÉHICULE

(30) Priorität: 25.02.2010 DE 102010010446
(43) Veröffentlichungstag der Anmeldung: 02.01.2013
(73) Patentinhaber: Dr.Ing. H.C. F. Porsche Aktiengesellschaft, 70435 Stuttgart (DE)
(72) Erfinder: KRAUSS, Lutz, 76187 Karlsruhe (DE); SEEHAUS, Timo, 71711 Steinheim (DE); HARTMANN, Rolf, 70182 Stuttgart (DE); BÖTTIGER, Albrecht, 71120 Grafenau-Döffingen (DE); MIM, Thomas, 71229 Leonberg (DE)
(86) Internationale Anmeldenummer: PCT/EP2010/007769
(87) Internationale Veröffentlichungsnummer: WO 2011/103904

(56) Entgegenhaltungen:
- EP-A2- 1 769 963
- DE-A1-102005 036 923
- FR-A1- 2 868 739
- JP-A- 2007 106 353

## Beschreibung

Die Erfindung betrifft ein Anzeige- und Bediensystem eines Kraftfahrzeugs gemäß dem Oberbegriff des Patentanspruchs 1.

In aus der Praxis bekannten Kraftfahrzeugen sind eine Vielzahl von Anzeigevorrichtungen und Bedienvorrichtungen verbaut, die zusammen ein Anzeige- und Bediensystem eines Kraftfahrzeugs bilden. So verfügen aus der Praxis bekannte Kraftfahrzeuge über ein Kombiinstrument, welches mehrere Anzeigevorrichtungen umfasst, so zum Beispiel eine Geschwindigkeits-Anzeigevorrichtung, eine Drehzahl-Anzeigevorrichtung sowie eine Anzeigevorrichtung zur Anzeige des Befüllstands eines Kraftstofftanks sowie zur Anzeige einer Motortemperatur. Bei Hybridfahrzeugen ist auf einer Anzeigevorrichtung des Kombiinstruments typischerweise auch ein Ladezustand eines elektrischen Energiespeichers anzeigbar. Ein Kombiinstrument eines Kraftfahrzeugs ist z.B. aus der DE 10 2004 020 111 A1 bekannt.

Ferner ist es aus der Praxis bereits bekannt, Bedienvorrichtungen einem Lenkrad des Kraftfahrzeugs zuzuordnen. Ferner können Anzeigevorrichtungen und/oder Bedienvorrichtungen, so zum Bespiel eine Anzeigevorrichtung eines Navigationssystems, seitlich neben dem Kombiinstrument, insbesondere im Bereich einer Mittelkonsole oder in Verlängerung der Mittelkonsole im Bereich eines Armaturenbretts, verbaut sein.

In aus der Praxis bekannten Kraftfahrzeugen sind demnach eine Vielzahl von Anzeigevorrichtungen und Bedienvorrichtungen verbaut. Bislang bekannte Anzeige- und Bediensysteme verfügen jedoch für den Fahrer über eine eingeschränkte Funktionalität, insbesondere über eine eingeschränkte Anzeigevorrichtungen und Bedienvorrichtungen sind zum Beispiel in FR2868739, DE102005036923 und JP2007106353 offenbart.

Hiervon ausgehend liegt der vorliegenden Erfindung das Problem zu Grunde ein neuartiges Anzeige- und Bediensystem eines Kraftfahrzeugs mit einer verbesserten Funktionalität zu schaffen. Dieses Problem wird durch ein Anzeige- und Bediensystem gemäß Patentanspruch 1 gelöst. Erfindungsgemäß umfasst das Lenkrad eine äußere linke Bedienvorrichtung, die ausschließlich der fahrerseitigen Interaktion mit einer äußeren linken Anzeigevorrichtung des Kombiinstruments dient, und eine äußere rechte Bedienvorrichtung, die ausschließlich der fahrerseitigen Interaktion mit einer äußeren rechten Anzeigevorrichtung des Kombiinstruments dient.

Mit der hier vorliegenden Erfindung wird erstmals vorgeschlagen, an einem Lenkrad des Kraftfahrzeugs zwei Bedienvorrichtungen vorzusehen, die seitenrichtig zwei Anzeigevorrichtungen des Kombiinstruments des Kraftfahrzeugs zugeordnet sind, nämlich derart, dass eine linke Bedienvorrichtung des Lenkrads ausschließlich der Interaktion mit einer linken Anzeigevorrichtung des Kombiinstruments und eine rechte Bedienvorrichtung ausschließlich der Interaktion mit einer rechten Anzeigevorrichtung des Kombiinstruments dient. Hierdurch wird die Funktionalität, insbesondere die Bedienerfreundlichkeit, eines Anzeige- und Bediensystems eines Kraftfahrzeugs gesteigert.

Erfindungsgemäß umfasst das Lenkrad des Kraftfahrzeugs weiterhin eine als Betriebsmodusauswahleinrichtung ausgebildete Bedienvorrichtung, die ein drehbares Wählelement, über welches vorzugsweise zumindest einer der Betriebsmodi rein elektromotorisches Fahren und/oder rein verbrennungsmotorisches Fahren und/oder kombiniertes elektro- und verbrennungsmotorisches Fahren fahrerseitig auswählbar bzw. aktivierbar ist, und weiterhin ein tastenartiges Boostauswahlelement, über welches als Sonderfall des kombinierten elektro- und verbrennungsmotorischen Fahrens elektromotorisches Boosten fahrerseitig auswählbar bzw. aktivierbar ist, aufweist. Über die dem Lenkrad zugeordnete Betriebsmodusauswahleinrichtung, die das drehbare Wählelement sowie das tastenartige Boostauswahlelement umfasst, kann die Bedienfreundlichkeit für einen Fahrer weiter gesteigert werden, da Betriebsmodi für das Kraftfahrzeug fahrerseitig sicher und zuverlässig ausgewählt bzw. aktiviert werden können.

Nach einer vorteilhaften Weiterbildung der Erfindung ändert sich abhängig von dem an der Betriebsmodusauswahleinrichtung ausgewählten bzw. aktivierten Betriebsmodus ein Hintergrundbeleuchtung, insbesondere eine Farbe der Hintergrundbeleuchtung, von Anzeigevorrichtungen und/oder Bedienvorrichtungen des Anzeige- und Bediensystems. Dann, wenn sich die Hintergrundbeleuchtung der Anzeigevorrichtungen und Bedienvorrichtungen des Anzeige- und Bediensystems abhängig von dem an der Betriebsmodusauswahleinrichtung ausgewählten Betriebsmodus ändert, ist für einen Fahrer nicht nur aufgrund einer isolierten Anzeige an einer Anzeigevorrichtung, sondern vielmehr am gesamten Erscheinungsbild des Anzeige- und Bediensystems unmittelbar erkennbar, in welchem Betriebsmodus das Kraftfahrzeug betrieben wird.

Vorzugsweise umfasst eine Anzeigevorrichtung des Kombiinstruments, insbesondere eine mittlere Anzeigevorrichtung desselben, einen ersten Anzeigebereich zur quantitativen Leistungsanzeige und einen zweiten Anzeigebereich zur qualitativen Leistungsanzeige. Dann, wenn an einer Anzeigevorrichtung sowohl eine quantitative Leistungsanzeige als auch eine qualitative Leistungsanzeige realisiert ist, kann ein Fahrer sein Fahrverhalten ideal anpassen und ein Fahrverhalten des Kraftfahrzeugs besser nachvollziehen.

Nach einer vorteilhaften Weiterbildung der Erfindung umfasst mindestens eine, vorzugsweise jede, Anzeigevorrichtung des Kombiinstruments ein rundes LCD-Display. Durch die Verwendung runder LCD-Displays in den Anzeigevorrichtungen des Kombiinstruments, die typischerweise eine kreisrunde Kontur aufweisen, ist eine optimale Integration von Anzeigefunktionen in die Anzeigevorrichtung möglich. Insbesondere können dann am äußeren Umfang der Anzeigevorrichtung realisierte Anzeigebereiche über das LCD-Display abgebildet werden, wodurch dann auf gesonderte LED für diese radial äußeren Anzeigebereiche verzichtet werden kann.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine schematisierte Darstellung eines erfindungsgemäßen Anzeige- und Bediensystems eines Kraftfahrzeugs;
- Fig. 2: ein Detail des erfindungsgemäßen Anzeige- und Bediensystems der Fig. 1
- Fig. 3: ein weiteres Detail des erfindungsgemäßen Anzeige- und Bediensystems der Fig. 1;
- Fig. 4: ein weiteres Detail des erfindungsgemäßen Anzeige- und Bediensystems der Fig. 1 in einem ersten Zustand;
- Fig. 5: das Detail der Fig. 4 in einem zweiten Zustand; und
- Fig. 6: das Detail der Fig. 4 in einem dritten Zustand.

Die hier vorliegende Erfindung betrifft ein Anzeige- und Bediensystem eines Kraftfahrzeugs.

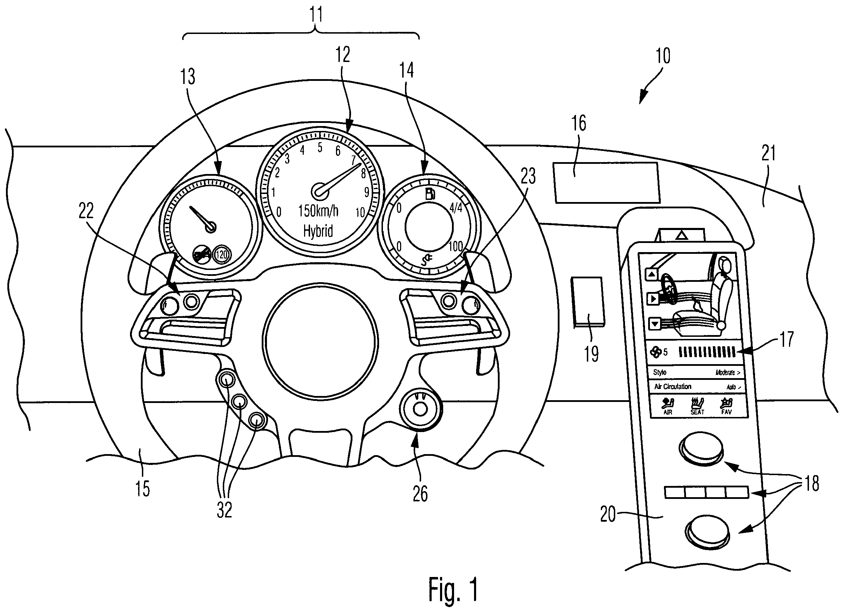

Fig. 1 zeigt eine schematisierte Darstellung eines erfindungsgemäßen Anzeige- und Bediensystems 10 eines Kraftfahrzeugs, welches mehrere Anzeigevorrichtungen und Bedienvorrichtungen umfasst.

Das erfindungsgemäße Anzeige- und Bediensystem verfügt über ein sogenanntes Kombiinstrument 11, welches im gezeigten Ausführungsbeispiel von drei zum Kombiinstrument 11 zusammengefassten Anzeigevorrichtungen 12, 13 und 14 gebildet wird, nämlich von einer mittleren Anzeigevorrichtung 12 und zwei seitlichen Anzeigevorrichtungen 13 und 14, wobei die Anzeigevorrichtung 13 zur linken Seite der mittleren Anzeigevorrichtung 12 und die Anzeigevorrichtung 14 zur rechten Seite der Anzeigevorrichtung 12 positioniert ist.

Es können auch mehr als drei Anzeigevorrichtungen zu einem Kombiinstrument oder ausschließlich zwei Anzeigevorrichtungen zu einem Kombiinstrument zusammengefasst sein.

Im gezeigten Ausführungsbeispiel dient die mittlere Anzeigevorrichtung 12 des Kombiinstruments 11 in erster Linie einer Drehzahlanzeige. Die linke Anzeigevorrichtung 13 des Kombiinstruments 11 dient in erster Linie einer Geschwindigkeitsanzeige. Die rechte Anzeigevorrichtung 14 des Kombiinstruments 11 dient in erster Linie einer Füllstandsanzeige eines Kraftstofftanks, und dann, wenn es sich beim Kraftfahrzeug um ein Hybridfahrzeug handelt, um die Anzeige des Ladezustands eines elektrischen Energiespeichers.

Die zum Kombiinstrument 11 zusammengefassten Anzeigevorrichtungen 12, 13 und 14 liegen in unmittelbarem Sichtbereich eines Fahrers und sind durch ein Lenkrad 15 des Kraftfahrzeugs hindurch unmittelbar einsehbar, wobei dem Lenkrad 15 mehrere Bedienvorrichtungen zugeordnet sind, auf die weiter unten im Detail eingegangen wird.

Seitlich neben dem Kombiinstrument 11 sind weitere Anzeigevorrichtungen bzw. Bedienvorrichtungen positioniert, so zum Beispiel eine Anzeigevorrichtung 16 eines Navigationssystems, eine Anzeigevorrichtung 17 eines Komfort- und/oder Entertainmentsystems, Bedienvorrichtungen 18 des Komfort- und/oder Entertainmentsystems sowie eine Bedienvorrichtung 19 eines Getriebes.

Die Anzeigevorrichtung 17 sowie die Bedienvorrichtungen 18 des Komfort- und/oder Entertainmentsystems sind dabei im Bereich einer Mittelkonsole 20 des Kraftfahrzeugs positioniert. Die Anzeigevorrichtung 16 des Navigationssystems ist in ein Armaturenbrett 21 integriert, nämlich seitlich neben dem Kombiinstrument 11 in Verlängerung der Mittelkonsole 20. Die Bedienvorrichtung 19 des Getriebes, bei welcher es sich um einen Getriebewählhebel handelt, ist ebenfalls in das Armaturenbrett 21 integriert, nämlich unterhalb der Anzeigevorrichtung 16 des Navigationssystems zwischen Mittelkonsole 20 und Kombiinstrument 11.

Wie bereits erwähnt, sind dem Lenkrad 15 mehrere Bedienvorrichtungen zugeordnet. So umfasst das Lenkrad 15 einer äußere, linke Bedienvorrichtung 22, die ausschließlich der fahrerseitigen Interaktion mit der äußeren, linken Anzeigevorrichtung 13 des Kombiinstruments 11 dient, sowie eine äußere, rechte Bedienvorrichtung 23, die ausschließlich der fahrerseitigen Interaktion mit der äußeren, rechten Anzeigevorrichtung 14 des Kombiinstruments 11 dient.

Sowohl die äußere, linke Bedienvorrichtung 22 des Lenkrads 15 als auch die äußere, rechte Bedienvorrichtung 23 des Lenkrads 15 weisen jeweils zwei Eingabeeinrichtungen auf. So umfasst jede dieser Bedienvorrichtungen 22 und 23 jeweils eine drehwalzenartige Eingabeeinrichtung 24, mithilfe derer durch Drehen und Drücken ein Anzeigemodus bzw. Interaktionsmodus der jeweiligen Anzeigevorrichtung 13 bzw. 14 des Kombiinstruments 11 ausgewählt und bestätigt werden kann. Insbesondere ist es möglich, durch Drehen und Drücken der drehwalzenartigen Eingabeeinrichtung 24 der jeweiligen Bedienvorrichtung 22 bzw. 23 in einem hierarchisch aufgebauten Anzeigemenü bzw. Interaktionsmenü der jeweiligen Anzeigevorrichtung 13 bzw. 14 des Kombiinstruments 11 zu navigieren und fahrerseitig einen Anzeigemodus bzw. Interaktionsmodus aus dem jeweiligen Anzeigemenü bzw. Interaktionsmenü auszuwählen. Über eine tastenartige Eingabeeinrichtung 25 der jeweiligen Bedienvorrichtung 22 bzw. 23 des Lenkrads 15 kann aus dem mithilfe der jeweiligen drehwalzenartigen Eingabeeinrichtung 24 ausgewählten Anzeigemodus bzw. Interaktionsmodus der jeweiligen Anzeigevorrichtung 13 bzw. 14 des Kombiinstruments 11 herausgesprungen werden kann, nämlich in einen dem jeweiligen ausgewählten Anzeigemodus bzw. Interaktionsmodus hierarchisch übergeordneten Anzeigemodus bzw. Interaktionsmodus des Anzeigemenüs bzw. Interaktionsmenüs der jeweiligen Anzeigevorrichtung 13 bzw. 14 des Kombiinstruments 11.

Durch die seitenrichtige Zuordnung der Bedienvorrichtungen 22 und 23 des Lenkrads 15 zu den Anzeigevorrichtungen 13 und 14 des Kombiinstruments 11 ist für den Fahrer ein einfacher und zuverlässiger Zugriff auf Anzeigemodi bzw. Interaktionsmodi und innerhalb der Anzeigemodi angezeigte Daten der Anzeigevorrichtungen 13 und 14 des Kombiinstruments 11 möglich. Hierdurch wird die Funktionalität, insbesondere Bedienerfreundlichkeit, eines Anzeige- und Bediensystems eines Kraftfahrzeugs gesteigert.

Zusätzlich zu den Bedienvorrichtungen 22 und 23 ist dem Lenkrad 15 eine weitere Bedienvorrichtungen 26 zugeordnet, bei welcher es sich um eine Betriebsmodusauswahleinrichtung handelt. An der Betriebsmodusauswahleinrichtung 26 ist einer von mehreren Betriebsmodi des als Hybridfahrzeug ausgebildeten Kraftfahrzeugs auswählbar bzw. aktivierbar, vorzugsweise zumindest einer der Betriebsmodi rein elektromotorisches Fahren und/oder rein verbrennungsmotorisches Fahren und/oder kombiniertes, elektro- und verbrennungsmotorisches Fahren und/oder als Sonderfall des kombinierten, elektro- und verbrennungsmotorischen Fahrens elektromotorisches Boosten. Bei der Auswahl des entsprechenden Betriebsmodus über die Betriebsmodusauswahleinrichtung 26 erfolgt durch den Fahrer des Kraftfahrzeugs und damit fahrerseitig.

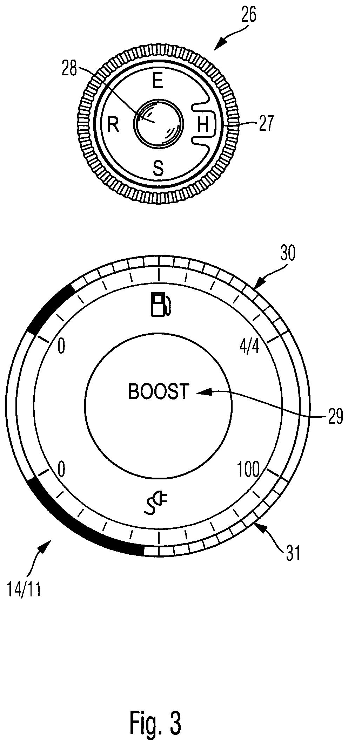

Details der Betriebsmodusauswahleinrichtung 26 ergeben sich aus Fig. 3. So kann Fig. 3 entnommen werden, dass die Betriebsmodusauswahleinrichtung 26 ein äußeres, drehbares Wählelement 27 sowie ein tastenartiges Boostauswahlelement 28 umfasst.

Durch Verdrehen des drehbaren Wählelements 27 durch einen Fahrer kann einer von mehreren Betriebsmodi fahrerseitig ausgewählt bzw. aktiviert werden, nämlich gemäß Fig. 3 einer der Betriebsmodi H, E, S bzw. R, wobei es sich beim Betriebsmodus E um eine rein elektromotorische Fahrt, beim Betriebsmodus H um eine kombinierte, elektro- und verbrennungsmotorisch Fahrt, beim Betriebsmodus S um eine kombinierte, kraftstoffminimierte, elektro- und verbrennungsmotorische Fahrt unter Sportbedingungen und beim Betriebsmodus R um eine kombinierte, elektro- und verbrennungsmotorische Fahrt unter Rennbedingungen handelt. Es sei darauf hingewiesen, dass die über drehbare Wählelement 27 fahrerseitig auswählbaren Betriebsmodi H, E, S bzw. R, die in Fig. 3 gezeigt sind, rein exemplarischer Natur sind.

So kann zusätzlich ein Betriebsmodus für eine rein verbrennungsmotorische Fahrt vorhanden sein. Weiterhin ist es möglich, dass die Betriebsmodi R und S für eine kombinierte, elektro- und verbrennungsmotorische Fahrt nach Sportbedingungen bzw. Rennbedingungen nicht vorhanden sind.

Wie bereits erwähnt, verfügt die Betriebsmodusauswahleinrichtung 26 nicht nur über das drehbare Wählelement 27, sondern vielmehr auch über das tastenartige Boostauswahlelement 28, über welches fahrerseitig als Sonderfall des kombinierten, elektro- und verbrennungsmotorischen Fahrens als Betriebsmodus elektromotorisches Boosten ausgewählt bzw. aktiviert werden kann. Das tastenartige Boostauswahlelement 28 ist dabei in der Mitte des drehbaren Wählelements 27 und damit in der Mitte der Betriebsmodusauswahleinrichtung 26 angeordnet.

Dann, wenn fahrerseitig als Betriebsmodus elektromotorisches Boosten durch Betätigung des Boostauswahlelements 28 aktiviert ist, wird, wie Fig. 3 entnommen werden kann, im bevorzugten Ausführungsbeispiel des erfindungsgemäßen Anzeige- und Bediensystems in einem entsprechenden Anzeigemodus der rechten Anzeigevorrichtung 14 des Kombiinstruments 11 in einem Anzeigebereich 29 derselben der Betriebsmodus BOOST, der für elektromotorisches Boosten steht, alphanumerisch angezeigt.

Wie Fig. 3 weiterhin entnommen werden kann, verfügt die Anzeigevorrichtung 14 des Kombiinstruments 11 über weitere Anzeigebereiche 30 und 31, nämlich einen Anzeigebereich 30 zur Anzeige eines Füllstands eine Kraftstofftanks sowie einen Anzeigebereich 31 zur Anzeige eines Ladezustands eines elektrischen Energiespeichers.

Nach einer vorteilhaften Weiterbildung der Erfindung wird abhängig von dem an der Betriebsmodusauswahleinrichtung 26 fahrerseitig ausgewählten bzw. aktivieren Betriebsmodus eine Hintergrundbeleuchtung zumindest der Anzeigevorrichtungen 12, 13 und 14 des Kombiinstruments 11, insbesondere eine Hintergrundbeleuchtung aller Anzeigevorrichtungen 12, 13, 14, 16 und 17 und aller Bedienvorrichtungen des Kraftfahrzeugs, angepasst bzw. geändert. So ist es zum Beispiel möglich, bei rein elektromotorischem Fahren sowie bei einem kraftstoffminimierten, kombinierten, elektro- und verbrennungsmotorischen Fahren die Hintergrundbeleuchtung der Anzeigevorrichtungen sowie Bedienvorrichtungen in einer ersten Farbe, zum Beispiel in Grün, zu gestalten.

In anderen Betriebsmodi hingegen, zum Beispiel beim rein verbrennungsmotorischen Fahren oder beim kombinierten, elektro- und verbrennungsmotorischen Fahren unter Sportbedingungen bzw. Rennbedingungen ist es zum Beispiel möglich die Hintergrundbeleuchtung in einer zweiten Farbe, zum Beispiel in Rot, auszuführen. Über die Hintergrundbeleuchtung und damit den Gesamteindruck des Anzeige- und Bediensystems ist dann für einen Fahrer der aktivierte Betriebsmodus des Kraftfahrzeugs unmittelbar sichtbar zw. erkennbar. In diesem Zusammenhang kann sich auch die Leuchtfarbe von Innenraumbeleuchtungen des Kraftfahrzeugs, so zum Beispiel die Farbe einer Ambientebeleuchtung des Kraftfahrzeugs, ändern.

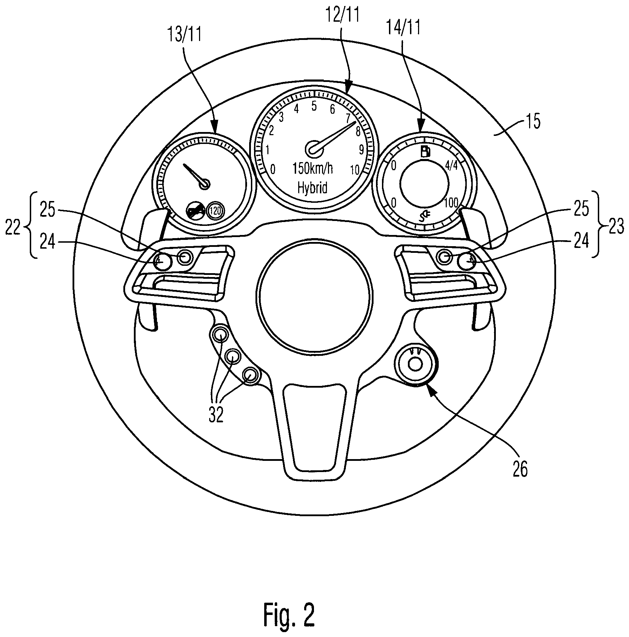

Fig. 2 kann entnommen werden, dass am Lenkrad 15 weitere Bedienvorrichtungen 32 verbaut sind, wobei über diese tastenartigen Bedienvorrichtungen 32 auf definierte Funktionen des Kraftfahrzeugs direkt zugegriffen werden kann, so zum Beispiel auf eine Fernlichtfunktion oder eine Geschwindigkeitsbegrenzungsfunktion oder eine Funktion zur Aktivierung von Scheibenwischern des Kraftfahrzeugs.

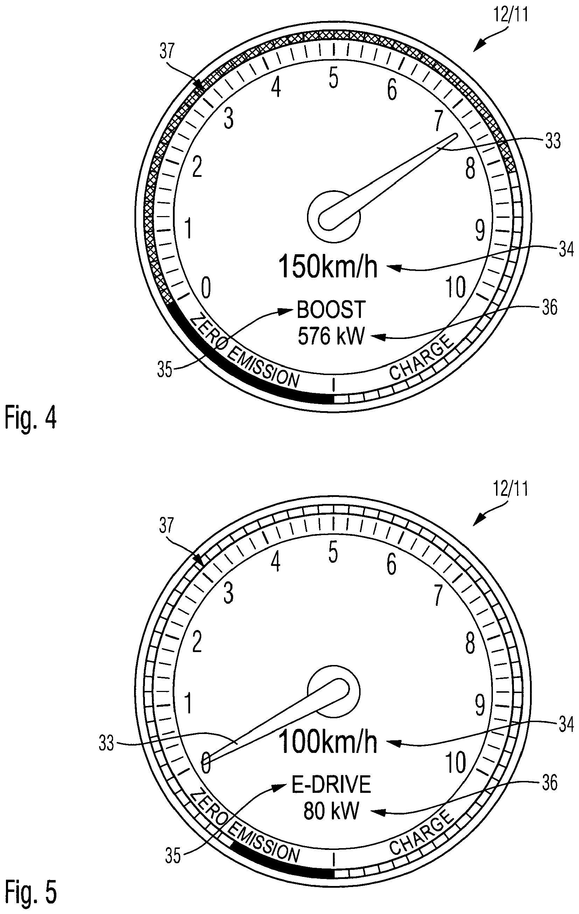

Wie bereits ausgeführt, dient die mittlere Anzeigevorrichtung 12 des Kombiinstruments 11, die in Fig. 4 bis 6 in Alleindarstellung in unterschiedlichen Anzeigezuständen gezeigt ist, insbesondere der Anzeige einer verbrennungsmotorischen Drehzahl, wobei hierzu die Anzeigevorrichtung 12 einen Drehzahlzeiger 33 umfasst.

Zusätzlich zum Drehzahlzeiger 33 umfasst die Anzeigevorrichtung 12 des Kombiinstruments 11 Anzeigebereiche, in welchen für den Fahrer zusätzliche Informationen anzeigbar sind, so zum Beispiel einen Anzeigebereich 34 zur Anzeige der aktuellen Fahrgeschwindigkeit und einen Anzeigebereich 35 zur Anzeige des aktiven Betriebsmodus.

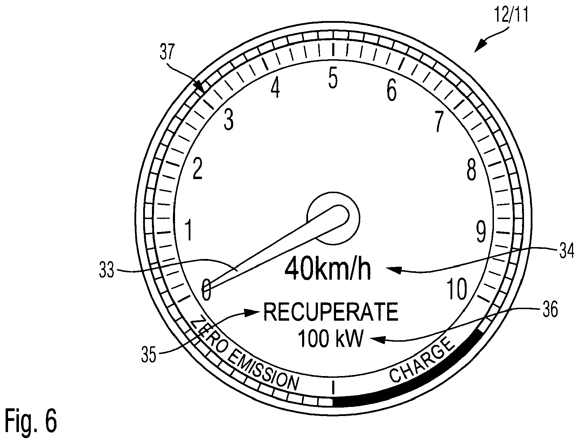

Dabei ist in Fig. 4 im Anzeigebereich 35 der Betriebsmodus BOOST bzw. elektromotorisches Boosten, in Fig. 5 der Betriebsmodus E-DRIVE bzw. rein elektromotorische Fahrt und in Fig. 6 der Betriebsmodus RECUPERATE, nämlich als Sonderfall den Fahrens und Beteiligung einer elektrische Maschine Rekuperieren gezeigt, wobei beim Rekuperieren ein elektrischer Energiespeicher des Hybridfahrzeugs z.B. beim Bremsen aufgeladen wird. Der Betriebsmodus RECUPERATE ist dabei nicht fahrerseitig auswählbar, vielmehr wird derselbe von einem Hybridsteuergerät automatisch aktiviert.

Darüber hinaus sind nach einer vorteilhaften Weiterbildung der Erfindung weitere Anzeigebereiche vorgesehen, nämlich ein Anzeigebereich 36 zur quantitativen Leistungsanzeige und ein Anzeigebereich 37 zur qualitativen Leistungsanzeige des Antriebsaggregats, nämlich insbesondere eines Hybridantriebs.

Im Anzeigebereich 36, welcher der quantitativen Leistungsanzeige dient, ist die insgesamt am Antriebsstrang anliegende Leistung, die verbrennungsmotorisch und elektromotorisch bereitgestellt wird, alphanumerisch anzeigbar. Dabei ist in Fig. 4 im Anzeigebereich 36 für Betriebsmodus BOOST als Gesamtleistung 576 kW angezeigt, die im Zugbetrieb vom Verbrennungsmotor und der oder jeder elektrischen Maschine des Hybridantriebs am Antriebsstrang bereitgestellt wird. In Fig. 5 ist für den Betriebsmodus E-DRIVE als Gesamtleistung im Zugbetrieb 100 kW angezeigt und in Fig. 6 ist für den Betriebsmodus RECUPERATE als Gesamtleistung 80 kW, wobei es sich beim Rekuperieren um Schubleistung handelt.

Im radial äußeren Anzeigebereich 37 ist hingegen die am Antriebsstrang anliegende Leistung getrennt nach elektromotorischer Leistung und verbrennungsmotorischer Leistung anzeigbar. Dabei werden vorzugsweise im radial äußeren Anzeigebereich 37 elektromotorische Leistung und verbrennungsmotorische Leistung in unterschiedlichen Farben und in unterschiedlichen Winkelbereichen der Anzeigevorrichtung 12 angezeigt.

Im Bereich sämtlicher Anzeigevorrichtungen 12, 13 und 14 des Kombiinstruments 11 sind LCD-Displays verbaut. Vorzugsweise handelt es sich bei diesen LCD-Displays um runde LCD-Displays, die in ihrer Kontur an die Kontur der Anzeigevorrichtung angepasst sind, wodurch dann einerseits eine optimale Integration von LCD-Displays in jeweiligen Anzeigevorrichtungen 12, 13 und 14 möglich ist, andererseits können Anzeigebereiche der Anzeigevorrichtungen 12, 13 und 14, die an einem radial äußeren Rand der jeweiligen Anzeigevorrichtung positioniert sind, auch über das LCD-Display bereitgestellt werden, wodurch es dann möglich ist, auf sonst übliche LED in diesen radial äußeren Anzeigebereichen zu verzichten.

## Patentansprüche

1. Anzeige- und Bediensystem eines Kraftfahrzeugs, mit mehreren zu einem Kombiinstrument zusammenfassten Anzeigevorrichtungen, mit mehreren einem Lenkrad zugeordneten Bedienvorrichtungen und mit weiteren, seitlichen neben dem Kombiinstrument, insbesondere im Bereich oder in Verlängerung einer Mittelkonsole, positionierten Anzeigevorrichtungen und/oder Bedienvorrichtungen, **dadurch gekennzeichnet, dass** das Lenkrad (15) eine äußere linke Bedienvorrichtung (22) umfasst, die ausschließlich der fahrerseitigen Interaktion mit einer äußeren linken Anzeigevorrichtung (13) des Kombiinstruments (11) dient, und dass das Lenkrad (15) eine äußere rechte Bedienvorrichtung (23) umfasst, die ausschließlich der fahrerseitigen Interaktion mit einer äußeren rechten Anzeigevorrichtung (14) des Kombiinstruments (11) dient, wobei die äußere linke Bedienvorrichtung (22) des Lenkrads (15) und die äußere rechte Bedienvorrichtung (23) des Lenkrads (15) jeweils zwei Eingabeeinrichtungen (24, 25) aufweisen, nämlich jeweils eine drehwalzenartige Eingabeeinrichtung (24) zur Auswahl und Bestätigung eines Anzeigemodus der jeweiligen äußeren Anzeigevorrichtung (13, 14) des Kombiinstruments (11) und jeweils eine tasterartige Eingabeeinrichtung (25) zum Zückspringen in einen dem jeweils ausgewählten Anzeigemodus übergeordneten Anzeigemodus der jeweiligen äußeren Anzeigevorrichtung (13, 14) des Kombiinstruments (11),

2. Anzeige- und Bediensystem nach Anspruch 1, **dadurch gekennzeichnet, dass** das Lenkrad (15) weiterhin eine als Betriebsmodusauswahleinrichtung (26) ausgebildete Bedienvorrichtung (26) umfasst, an welcher zumindest einer der Betriebsmodi rein elektromotorisches Fahren und/oder rein verbrennungsmotorisches Fahren und/oder kombiniertes elektro- und verbrennungsmotorisches Fahren und/oder als Sonderfall des kombinierten elektro- und verbrennungsmotorischen Fahrens elektromotorisches Boosten fahrerseitig auswählbar bzw. aktivierbar ist.

3. Anzeige- und Bediensystem nach Anspruch 2, **dadurch gekennzeichnet, dass** sich abhängig von dem an der Betriebsmodusauswahleinrichtung (26) ausgewählten bzw. aktivierten Betriebsmodus eine Hintergrundbeleuchtung, insbesondere eine Farbe der Hintergrundbeleuchtung, von Anzeigevorrichtungen (12, 13, 14, 16, 17) und/oder Bedienvorrichtungen (18, 19) des Anzeige- und Bediensystems ändert.

4. Anzeige- und Bediensystem nach Anspruch 2 oder 3, **dadurch gekennzeichnet, dass** die Betriebsmodusauswahleinrichtung (26) ein drehbares Wählelement (27) aufweist, über welches zumindest einer der Betriebsmodi rein elektromotorisches Fahren und/oder kombiniertes elektro- und verbrennungsmotorisches Fahren fahrerseitig auswählbar bzw. aktivierbar ist, und dass die Betriebsmodusauswahleinrichtung (26) weiterhin ein tastenartiges Boostauswahlelement (28) aufweist, über welches als Sonderfall des kombinierten elektro- und verbrennungsmotorischen Fahrens elektromotorisches Boosten fahrerseitig auswählbar bzw. aktivierbar ist.

5. Anzeige- und Bediensystem nach Anspruch 4, **dadurch gekennzeichnet, dass** das tastenartige Boostauswahlelement (28) in der Mitte des drehbaren Wählelements (27) positioniert ist.

6. Anzeige- und Bediensystem nach einem der Ansprüche 1 bis 5, **dadurch gekennzeichnet, dass** eine Anzeigevorrichtung (12) des Kombiinstruments (11), insbesondere eine mittlere Anzeigevorrichtung desselben, einen ersten Anzeigebereich (36) zur quantitativen Leistungsanzeige und einen zweiten Anzeigebereich (37) zur qualitativen Leistungsanzeige umfasst.

7. Anzeige- und Bediensystem nach Anspruch 6, **dadurch gekennzeichnet, dass** im ersten Anzeigebereich (36) zur quantitativen Leistungsanzeige die insgesamt am Antriebstrang anliegende Leistung alphanumerisch anzeigbar ist.

8. Anzeige- und Bediensystem nach Anspruch 6 oder 7, **dadurch gekennzeichnet, dass** im zweiten Anzeigebereich (37) zur qualitativen Leistungsanzeige die elektromotorisch und/oder verbrennungsmotorisch am Antriebstrang anliegende Leistung getrennt anzeigbar ist.

9. Anzeige- und Bediensystem nach einem der Ansprüche 1 bis 8, **dadurch gekennzeichnet, dass** mindestens eine Anzeigevorrichtung (12, 13, 14) des Kombiinstruments (11) ein rundes LCD-Display umfasst.

## Claims

1. Display and operating system of a motor vehicle, having a plurality of display devices which are combined to form an instrument cluster, having a plurality of operating devices which are assigned to a steering wheel and having further display devices and/or operating devices which are positioned laterally adjacent to the instrument cluster, in particular in the region of or as an extension of a central console, **characterized in that** the steering wheel (15) comprises an outer left-hand operating device (22) which serves exclusively for driver interaction with an outer left-hand display device (13) of the instrument cluster (11), and **in that** the steering wheel (15) comprises an outer right-hand operating device (23) which serves exclusively for driver interaction with an outer right-hand display device (14) of the instrument cluster (11), wherein the outer left-hand operating device (22) of the steering wheel (15) and the outer right-hand operating device (23) of the steering wheel (15) have in each case two input devices (24, 25), specifically in each case one rotary-barrel-like input device (24) for selecting and confirming a display mode of the respective outer display device (13, 14) of the instrument cluster (11), and in each case one button-like input device (25) for returning to a display mode of the respective outer display device (13, 14) of the instrument cluster (11) superordinate to the respectively selected display mode.

2. Display and operating system according to Claim 1, **characterized in that** the steering wheel (15) furthermore comprises an operating device (26) which is in the form of an operating mode selecting device (26) and by means of which at least one of the operating modes of purely electric-motor-powered driving and/or purely combustion-engine-powered driving and/or combined electric-motor-powered and combustion-engine-powered driving and/or electric-motor-powered boosting as a special case of combined electric-motor-powered and combustion-engine-powered driving can be selected or activated by the driver.

3. Display and operating system according to Claim 2, **characterized in that** a backlighting, in particular a color of the backlighting, of display devices (12, 13, 14, 16, 17) and/or operating devices (18, 19) of the display and operating system changes as a function of the operating mode selected or activated by means of the operating mode selecting device (26).

4. Display and operating system according to Claim 2 or 3, **characterized in that** the operating mode selecting device (26) has a rotatable selecting element (27) by means of which at least one of the operating modes of purely electric-motor-powered driving and/or combined electric-motor-powered and combustion-engine-powered driving can be selected or activated by the driver, and **in that** the operating mode selecting device (26) furthermore has a button-like boost selecting element (28) by means of which electric-motor-powered boosting as a special case of combined electric-motor-powered and combustion-engine-powered driving can be selected or activated by the driver.

5. Display and operating system according to Claim 4, **characterized in that** the button-like boost selecting element (28) is positioned in the center of the rotatable selecting element (27).

6. Display and operating system according to one of Claims 1 to 5, **characterized in that** a display device (12) of the instrument cluster (11), in particular a central display device thereof, comprises a first display area (36) for quantitative power display and a second display area (37) for qualitative power display.

7. Display and operating system according to Claim 6, **characterized in that** the total power acting in the drivetrain can be displayed alphanumerically in the first display area (36) for quantitative power display.

8. Display and operating system according to Claim 6 or 7, **characterized in that** the electric motor power and/or combustion engine power acting in the drivetrain can be displayed separately in the second display area (37) for qualitative power display.

9. Display and operating system according to one of Claims 1 to 8, **characterized in that** at least one display device (12, 13, 14) of the instrument cluster (11) comprises a circular LCD display.

## Revendications

1. Système d'affichage et de commande d'un véhicule automobile, comprenant plusieurs dispositifs d'affichage regroupés sous la forme d'un tableau de bord, plusieurs dispositifs de commande associés à un volant et d'autres dispositifs d'affichage et/ou dispositifs de commande latéraux disposés à côté du tableau de bord, en particulier dans la région ou dans le prolongement d'une console centrale,
**caractérisé en ce que** le volant de direction (15) comprend un dispositif de commande extérieur gauche (22) réservé exclusivement à l'interaction du conducteur avec un dispositif d'affichage extérieur gauche (13) du tableau de bord (11), et **en ce que** le volant de direction (15) comprend un dispositif de commande extérieur droit (23) réservé exclusivement à l'interaction du conducteur avec un dispositif d'affichage extérieur droit (14) du tableau de bord (11), dans lequel le dispositif de commande extérieur gauche (22) du volant de direction (15) et le dispositif de commande extérieur droit (23) du volant de direction (15) comportent chacun deux dispositifs d'entrée (24, 25), à savoir un dispositif d'entrée du type à rouleau rotatif (24) pour sélectionner et confirmer un mode d'affichage du dispositif d'affichage extérieur (13, 14) respectif du tableau de bord (11) et un dispositif d'entrée du type bouton (25) permettant de revenir à un mode d'affichage du dispositif extérieur (13, 14) respectif du tableau de bord (11) d'un niveau supérieur au mode d'affichage respectif sélectionné.

2. Système d'affichage et de commande selon la revendication 1, **caractérisé en ce que** le volant de direction (15) comprend en outre un dispositif de commande (26) qui est réalisé sous la forme d'un dispositif de sélection de mode de fonctionnement (26) sur lequel le conducteur peut sélectionner ou activer l'un des modes de fonctionnement parmi la propulsion uniquement par moteur électrique et/ou la propulsion uniquement par moteur thermique et/ou la propulsion combinée par moteur électrique et par moteur thermique et/ou, en tant que cas particulier de la propulsion combinée par moteur électrique et par moteur thermique, la suralimentation par moteur électrique.

3. Système d'affichage et de commande selon la revendication 2, **caractérisé en ce qu'**un rétroéclairage, en particulier une couleur du rétroéclairage, des dispositifs d'affichage (12, 13, 14, 16, 17) et/ou des dispositifs de commande (18, 19) du système d'affichage et de commande, varie en fonction du mode de fonctionnement sélectionné ou activé sur le dispositif de sélection de mode de fonctionnement (26).

4. Système d'affichage et de commande selon la revendication 2 ou 3, **caractérisé en ce que** le dispositif de sélection de mode de fonctionnement (26) comporte un élément de sélection rotatif (27) par l'intermédiaire duquel au moins l'un des modes de fonctionnement parmi la propulsion uniquement par moteur électrique et/ou la propulsion combinée par moteur électrique et par moteur thermique, peut être sélectionné ou activé par le conducteur, et **en ce que** le dispositif de sélection de mode de fonctionnement (26) comporte en outre un élément de sélection de suralimentation du type bouton (28) au moyen duquel, en tant que cas particulier de propulsion combinée par moteur électrique et par moteur thermique, la suralimentation par moteur électrique peut être sélectionnée ou activée par le conducteur.

5. Système d'affichage et de commande selon la revendication 4, **caractérisé en ce que** l'élément sélecteur de suralimentation de type bouton (28) est placé au centre de l'élément sélecteur rotatif (27).

6. Système d'affichage et de commande selon l'une des revendications 1 à 5, **caractérisé en ce qu'**un dispositif d'affichage (12) du tableau de bord (11), en particulier un dispositif d'affichage central de celui-ci, comprend une première région d'affichage (36) permettant un affichage quantitatif de la puissance et une seconde région d'affichage (37) permettant un affichage qualitatif de la puissance.

7. Système d'affichage et de commande selon la revendication 6, **caractérisé en ce que**, dans la première région d'affichage (36) permettant un affichage quantitatif de la puissance, la puissance totale appliquée sur la chaîne cinématique peut être affichée de manière alphanumérique.

8. Système d'affichage et de commande selon la revendication 6 ou 7, **caractérisé en ce que**, dans la seconde région d'affichage (37) permettant un affichage qualitatif de la puissance, la puissance appliquée à la chaîne cinématique par moteur électrique et/ou par moteur thermique peut être affichée séparément.

9. Système d'affichage et de commande selon l'une des revendications 1 à 8, **caractérisé en ce qu'**au moins un dispositif d'affichage (12, 13, 14) du tableau de bord (11) comprend un afficheur LCD rond.
